# DEMANDE DE BREVET EUROPEEN

(11) **EP 0 538 116 A1**
(43) Date de publication de la demande: **21.04.1993**
(21) Numéro de dépôt: 92402796.4
(22) Date de dépôt: 13.10.1992
(51) Int. Cl.: B60G 3/14, B60G 7/00

(54) **Suspension notamment à bras tiré pour véhicule automobile, avec système d'amortissement des chocs longitudinaux.**

(30) Priorité: 15.10.1991 FR 9112697
(71) Demandeur: AUTOMOBILES PEUGEOT, F-75116 Paris (FR); AUTOMOBILES CITROEN, F-92200 Neuilly sur Seine (FR)
(72) Inventeur: Galtier, Lucien, F-91330 Morsang-sur-Orge (FR); Barthelemy, André, F-78470 Saint Remy Les Chevreuses (FR)
(74) Mandataire: Durand, Yves Armand Louis

(57) **Abrégé**

La présente invention se rapporte à une suspension, notamment pour roues arrière de véhicule automobile.

Cette suspension comprend un organe de suspension (31) articulé sur la caisse (10) du véhicule (1), de façon à permettre le débattement de cet organe dans un plan perpendiculaire au plan d'assiette (P) du véhicule, un élément pendulaire (33) articulé sur l'organe de suspension par l'intermédiaire d'un axe (33b) qui s'étend sensiblement parallèlement au plan d'assiette et transversalement au plan médian (M) du véhicule, ainsi qu'un support de roue (32) solidiare de l'élément pendulaire (33), et est caractérisée en ce que l'axe d'articulation (33b) de l'élément pendulaire est incliné à partir du support de roue (32), vers l'arrière du véhicule et vers ledit plan médian.

Cette invention s'applique à la fabrication de suspensions, par exemple à bras oscillant tiré.

## Description

La présente invention se rapporte à une suspension, notamment du type à bras tiré pour roue arrière de véhicule automobile.

On connait depuis longtemps des suspensions comprenant un organe de suspension tel qu'un bras oscillant articulé sur la caisse du véhicule, de façon à permettre des débattements de cet organe dans un plan généralement vertical qui est perpendiculaire au plan d'assiette du véhicule. Dans certaines de ces suspensions connues, un support de roue tel qu'une fusée sur laquelle la roue est montée à rotation, est solidaire de l'extrémité libre du bras oscillant par l'intermédiaire d'un élément élastiquement déformable ou encore d'un élément pendulaire qui s'articule sur le bras autour d'un axe s'étendant parallèlement au plan d'assiette et perpendiculaire au plan longitudinal médian du véhicule. Un tel élément permet d'amortir au moins une partie des chocs ou contraintes longitudinaux auxquels est soumise la suspension, afin de réduire les vibrations et les bruits dans le véhicule.

Toutefois, de tels systèmes d'amortissement des chocs longitudinaux dits "horizontaux", ont divers inconvénients. Principalement, dans un dévers ou en cas de freinage, quand l'une des roues d'un train est plus sollicitée que l'autre, ces systèmes accentuent le léger braquage parasite de cette roue qui altère les qualités routières du véhicule. De ce fait, on est obligé pour limiter un tel braquage d'effectuer un compromis entre le confort et la tenue de route du véhicule.

Aussi, la présente invention a pour but de proposer une suspension qui pallie notamment les inconvénients expliqués ci-dessus.

A cet effet, l'invention a pour objet une suspension, notamment pour roue arrière de véhicule automobile, du type comprenant un organe de suspension articulé sur la caisse du véhicule, de façon à permettre le débattement de cet organe dans un plan perpendiculaire au plan d'assiette du véhicule, un élément pendulaire articulé sur l'organe de suspension par l'intermédiaire d'un axe qui s'étend sensiblement parallèlement au plan d'assiette et transversalement au plan médian du véhicule, ainsi qu'un support de roue solidaire de l'élément pendulaire, caractérisée en ce que l'axe d'articulation de l'élément pendulaire sur l'organe de suspension est incliné, à partir du support de roue, vers l'arrière du véhicule et vers ledit plan médian.

Plus précisément, en projection sur le plan d'assiette du véhicule, l'axe d'articulation précité forme avec une droite perpendiculaire au plan médian, un angle compris entre 1 et 25°.

Suivant une autre caractéristique de l'invention, l'axe d'articulation précité est situé en-dessous de l'axe de rotation de la roue sur son support.

Suivant encore une autre caractéristique, la suspension comporte des moyens formant butée qui sont disposés de façon à limiter le mouvement pendulaire de l'élément précité autour de l'axe d'articulation.

La suspension se caractérise en ce que les moyens formant butée comprennent une pièce élastiquement déformable qui est interposée entre l'organe de suspension et l'élément pendulaire.

On notera ici que la pièce élastiquement déformable est disposée en regard de l'axe de rotation précité de la roue.

L'invention est aussi caractérisée en ce que la pièce élastiquement déformable a un profil annulaire et est liée par adhérence à une partie fixe qui est solidaire de l'organe de suspension, ainsi qu'à une partie mobile qui est solidaire de l'élément pendulaire.

Selon un mode de réalisation préféré, la pièce élastiquement déformable est constituée par un bloc cylindrique qui est monté dans un logement cylindrique de l'organe de suspension, une partie cylindrique du support de roue étant logée dans ledit bloc de sorte que les axes longitudinaux de la pièce, du logement et de la partie cylindrique sont confondus avec l'axe de rotation précité de la roue.

On précisera encore que l'organe de suspension est un bras oscillant dit "tiré" dont l'articulation sur la caisse est constituée par un axe situé vers l'avant du véhicule par rapport aux axes précités.

En outre, cet axe est disposé de façon à être sensiblement parallèle au plan d'assiette et perpendiculaire au plan médian du véhicule.

Selon une dernière caractéristique, l'axe d'articulation de l'élément pendulaire est en arrière de l'axe de roue.

Mais d'autres caractéristiques et avantages de l'invention ressortiront mieux de la description détaillée d'un mode de réalisation, donnée uniquement à titre d'exemple, qui suit et se réfère aux dessins annexés, dans lesquels :

La figure 1 est une illustration schématique en vue de dessus d'un véhicule équipé d'une suspension arrière conforme à la présente invention.

La figure 2 est un schéma fonctionnel qui représente en perspective la suspension illustrée sur la figure 1.

La figure 3 est une vue en élévation de côté d'un mode de réalisation préféré de l'invention.

La figure 4 est une vue agrandie d'un détail de la figure 3, qui illustre les différentes positions des pièces principales de la suspension lors de son fonctionnement.

La figure 5 est une vue partielle en coupe, suivant la ligne V-V de la figure 3.

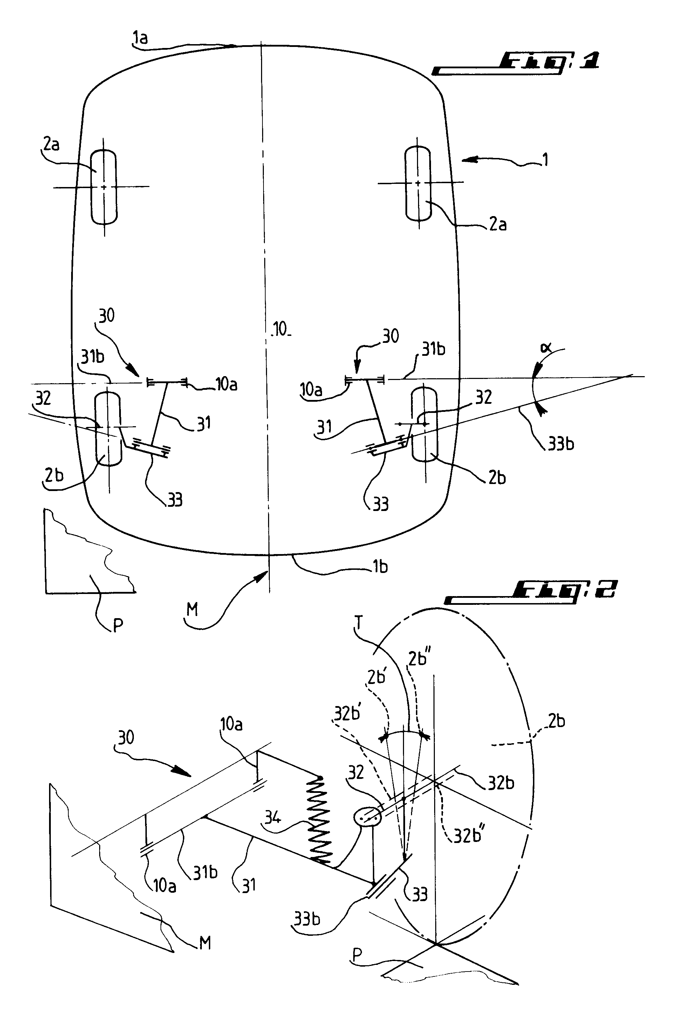

En se reportant à la figure 1, on voit un véhicule automobile 1. Ce véhicule 1 comporte, près de sa partie avant 1a, deux roues avant 2a. A proximité de la partie arrière 1b du véhicule, se trouvent deux roues arrière 2b. Les roues 2a, 2b reposent sur un plan supposé horizontal : lorsque le véhicule est à l'arrêt et en ordre de marche, ce plan se confond alors avec le plan d'assiette P du véhicule. La référence M désigne un plan dit médian, qui s'étend perpendiculairement au plan P, suivant une direction longitudinale et centrale du véhicule 1. Le plan médian M divise donc à peu près symétriquement en deux la caisse du véhicule 1, qui est généralement désignée par la référence numérique 10.

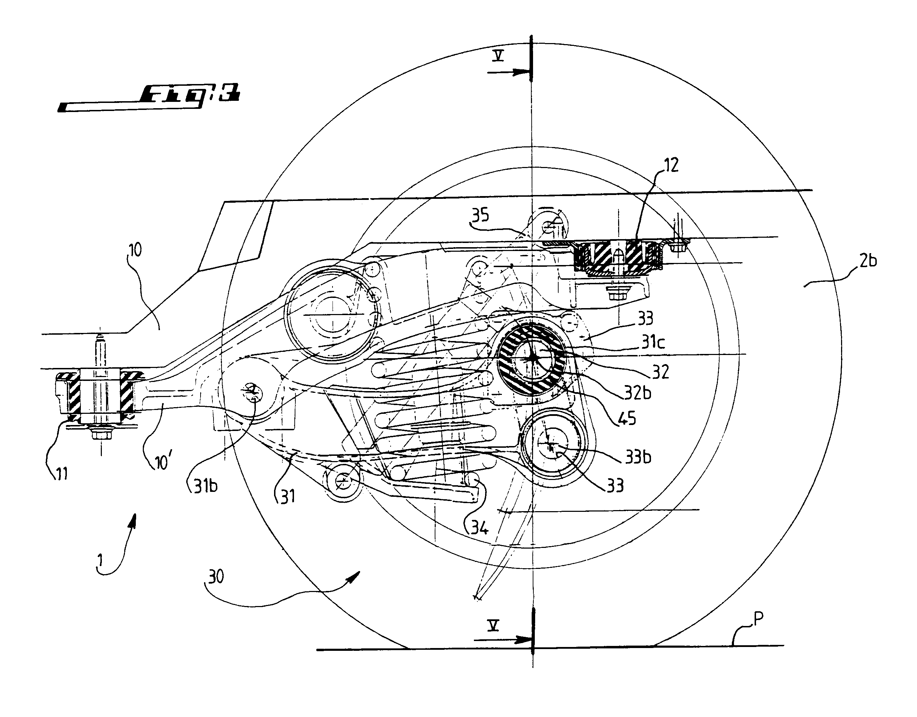

Sur les figures 1 et 2, on a désigné par 10a des paliers qui font partie de la caisse du véhicule 1. Sur chaque paire de ces paliers 10a, un organe de suspension ou de débattement 31 est articulé. Chaque organe 31 fait partie d'une suspension 30 pour l'une des roues arrière 2b du véhicule.

Suivant l'exemple schématique illustré, l'organe 31 de la suspension 30 est monté à rotation sur des paliers 10a de façon que cet organe 31 puisse débattre dans un plan perpendiculaire au plan d'assiette P du véhicule. Plus précisément, l'organe 31 est ici un bras oscillant "tiré" qui débat dans un plan sensiblement parallèle au plan M et dont un axe 31b permettant son articulation sur la caisse 10 est situé vers l'avant du véhicule 1 par rapport à un support 32 sur lequel la roue 2b correspondante est montée à rotation.

Le support de roue 32, par exemple une fusée avec un axe de rotation 32b de la roue 2b, est relié à l'extrémité libre de l'organe de suspension 31 par l'intermédiaire d'un élément pendulaire 33. L'élément pendulaire 33 est articulé sur l'organe 31 autour d'un axe 33b qui s'étend dans un plan généralement parallèle au plan d'assiette P, suivant une direction transversale au plan longitudinal médian M du véhicule 1. Comme on l'expliquera ultérieurement, l'élément pendulaire 33 peut pivoter vers l'avant ou vers l'arrière du véhicule autour de son axe 33b, afin d'amortir les chocs et contraintes orientées suivant la direction longitudinale du véhicule 1, tandis que l'organe 31, sur lequel est monté un élément de suspension tel qu'un ressort 34 relié à la caisse 10, absorbe les chocs "verticaux" (c'est-à-dire perpendiculaires au plan P) en débattant autour de ses paliers 10a.

Conformément à la présente invention, l'axe d'articulation 33b qui relie l'élément pendulaire 33 à l'organe de suspension 31 est incliné par rapport à la direction de l'axe de rotation 32b de la roue 2b.

Comme on le voit sur la figure 1, en projection sur le plan d'assiette P, l'axe d'articulation 33b est incliné à partir du support de roue 32, vers l'arrière 1b du véhicule et vers le plan médian M, de façon à former avec une droite - correspondant à l'axe d'articulation du bras 31 sur la caisse 10 du véhicule - perpendiculaire au plan M, un angle α .

De préférence, l'angle α est compris entre 1 et 25°. Un tel angle α a pour effet de compenser ou d'annuler les braquages parasites de la roue 2b rencontrés dans les suspensions à bras tirés équipées de systèmes d'amortissement des chocs longitudinaux. Ainsi, comme représenté sur la figure 2, lorsque l'axe de rotation 32b est sollicité suivant la direction longitudinale du véhicule 1, et qu'il vient dans les positions illustrées en pointillés 32b′, 32b˝ selon le sens de la sollicitation, la roue 2b se déplace, comme indiqué par la trajectoire T entre les points 2b′, et 2b˝ avec une composante perpendiculaire aux plans M et P. Autrement dit, le mouvement pendulaire de l'axe de rotation 32b n'est pas parallèle au plan M, mais est orienté vers l'avant 1a du véhicule et vers le plan M, proportionnellement à la valeur de l'angle α .

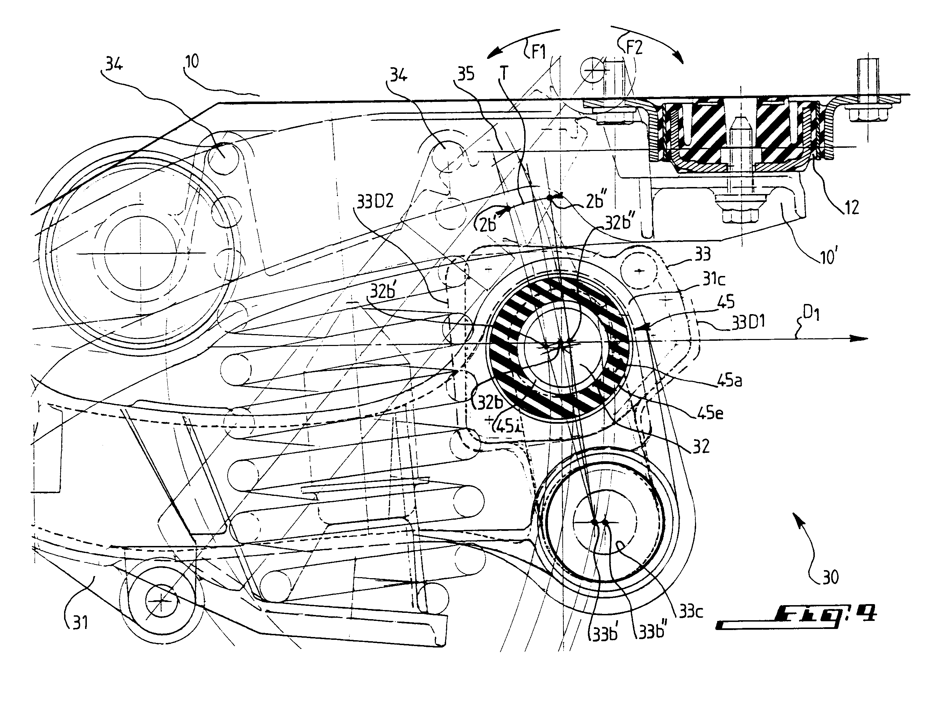

En se reportant maintenant aux figures 3 à 5 particulièrement, un mode de réalisation préféré de l'invention va être décrit en détail ci-après.

Sur ces figures, les parties identiques ou similaires à celles expliquées en se reportant aux figures 1 et 2, sont désignées par les mêmes références.

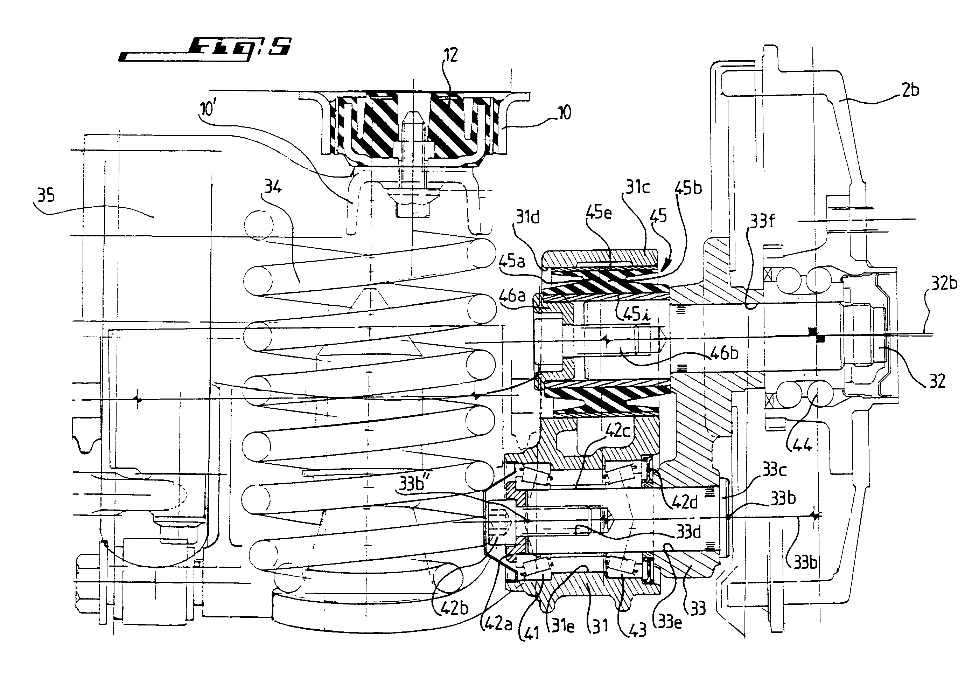

Sur les figures 3 et 4 où le plan M est confondu avec le plan de la feuille, on voit que la suspension 30 est montée sur la caisse 10 du véhicule par l'intermédiaire d'une traverse 10′. La traverse de caisse 10′ est montée sous la carrosserie du véhicule 1 à l'aide de bagues élastiquement déformables 11 et 12. Les bagues 11 et 12, qui sont respectivement disposées à l'avant et à l'arrière de la suspension 30, permettent de fixer élastiquement l'organe de suspension 31 sur la caisse 10, pour assurer un filtrage vertical des vibrations et des chocs.

On précisera ici que l'axe 31b d'articulation de l'organe 31 sur la caisse 10 peut aussi être pris en chape soit sur la structure de la caisse directement, soit sur la traverse.

L'axe d'articulation 31b est disposé de sorte que son axe longitudinal soit sensiblement parallèle au plan P et s'étende à angle droit par rapport au plan de la feuille sur les figures 3 et 4. Comme sur les exemples schématiques des figures 1 et 2, l'organe de suspension 31 est un bras oscillant "tiré". Ainsi, l'axe d'articulation 31b est à l'avant - c'est-à-dire à proximité de la bague élastique avant 11 - des axes 33b et 32b sur lesquels l'élément pendulaire 33 et la roue 2b sont respectivement montés à rotation.

On voit bien sur les figures 3 à 5 que l'axe d'articulation 33b grâce auquel l'élément 33 peut effectuer son mouvement pendulaire est situé en-dessous de l'axe de rotation 32b.

L'extrémité libre du bras oscillant 31 sur laquelle l'élément pendulaire 33 s'articule, comporte comme visible sur la figure 4 une partie supérieure en saillie vers la caisse 10, dite partie fixe 31c. La partie fixe 31c est intégrée au bras 31 et comprend un logement débouchant 31d, de forme généralement cylindrique. L'axe longitudinal du logement ou alésage 31d est confondu avec l'axe de rotation 32b de la roue 2b.

Approximativement au droit de l'alésage 31d, le bras 31 comporte un deuxième orifice débouchant ou alésage 31e qui est incliné vers l'arrière du véhicule et vers le plan médian M. Deux roulements 41 et 43, de préférence à rouleaux coniques, sont logés dans l'alésage 31e. L'axe de rotation 33b est monté dans la bague centrale de ces roulements 41, 43. On notera ici que conformément à l'invention, la précision dimensionnelle et la qualité des guidages devront être trés élevées pour garantir un bon fonctionnement du système d'amortissement horizontal constitué par le bras 31 et l'élément 33, notamment. Ainsi, les roulements 41, 43 pourront également être du type à aiguilles ou analogues.

Suivant l'exemple illustré, l'élément pendulaire 33 est constitué par une pièce monobloc en forme de biellette. L'élément 33 comprend un orifice débouchant ou alésage 33e qui s'étend coaxialement à l'alésage 31e décrit plus haut, c'est-à-dire suivant un angle de 1 à 25° par rapport à une direction perpendiculaire au plan M.

L'axe d'articulation 33b est monté, par exemple à force, dans l'alésage 33e et est longitudinalement immobilisé d'une part à l'aide d'un épaulement 33c venu de matière avec l'axe 33b, et d'autre part à l'aide d'une rondelle d'arrêt 42a. La rondelle 42a est montée à l'extrémité intérieure de l'axe - c'est-à-dire opposée à la roue 12b - par une vis 42b qui est serrée dans un taraudage 33d prévu dans l'axe 33b. Cette rondelle 42a s'appuie contre la bague intérieure du roulement 41, qui repose elle-même contre une entretoise 42c emmanchée sur l'axe 33b. Le roulement 43 est positionné sur l'axe 33b entre l'entretoise 42c et une butée 42d, en contact avec la périphérie de l'alésage 33e.

Sensiblement au droit de l'alésage 33e, l'élément en forme de biellette 33 comprend un deuxième logement ou alésage débouchant 33f, que traverse de part en part le support de roue 32. Cet alésage 33f s'étend perpendiculairement au plan médian M, dans un plan parallèle au plan P, et vient en regard de l'alésage 31d de la partie fixe 31c du bras.

Le support de roue 32 est monté serré dans l'alésage 33f et fait saillie de part et d'autre de ce dernier. Plus précisément, le support ou fusée 32 fait saillie suivant son axe 32b vers l'extérieur - c'est-à-dire à l'opposé de la partie fixe 31c - pour permettre le montage d'un roulement à billes 44, grâce auquel le moyeu de la roue 2b est monté à rotation sur le support 32. D'autre part, la fusée 32 s'étend depuis l'alésage 33f de façon à faire saillie coaxialement dans l'alésage 31d de la partie fixe du bras 31.

On voit sur les figures 3 à 5 que des moyens formant butée 45 sont prévus dans le système d'amortissement horizontal de la suspension 30. Ces moyens formant butée 45 limitent et amortissent le mouvement pendulaire de l'élément 33 autour de son axe d'articulation incliné 33b.

En se reportant à la figure 5, on voit que les moyens 45 comprennent une pièce élastiquement déformable 45a, qui est interposée entre l'organe de suspension 31 et l'élément pendulaire 33. Cette pièce 45a est un bloc en matière élastique telle que par exemple du caoutchouc, dont les profils externe et interne sont cylindriques. Le bloc 45a est donc annulaire et présente en section longitudinale suivant son diamètre un profil en forme de double H. Des bagues 45e et 45i sont liées par adhérence aux surfaces cylindriques externe et interne du bloc 45a, respectivement. On comprend donc que grâce à la section d'aire réduite 45b que constitue la barre orientée radialement de chaque section en forme de H du bloc, les bagues interne et externe peuvent subir un déplacement relatif l'une par rapport à l'autre. Toutefois, les déplacements axiaux radiaux ou en rotation sont limités à une valeur maximale par la résistance élastique à la déformation de la section 45b.

La bague externe 45e du bloc élastique 45a est fixée dans l'alésage 31d de la partie fixe 31c, en regard de l'axe 32b de la fusée 32. Cet alésage forme donc un logement cylindrique 31d pour la bague 45e. Une partie cylindrique de la fusée 32 qui fait saillie dans l'alésage 31d est logée dans la bague interne 45i des moyens 45. Cette partie de la fusée 32 constitue donc une partie mobile qui est solidaire de l'élément pendulaire 33.

Le positionnement axial de la bague interne 45i est assuré, côté roue par la périphérie de l'alésage 33f contre laquelle elle prend appui, et du côté interne (le plus proche du ressort 34 et de l'amortisseur 35) par une coupelle 46a qui est fixée sur l'extrémité correspondante de la fusée 32, à l'aide d'une vis 46b.

On notera ici que suivant ce mode de réalisation, l'axe longitudinal de la pièce élastique 45a, ainsi que ceux du logement 31d, et de la partie mobile de la fusée 32 sont confondus avec l'axe de rotation 32b de la roue 2b.

Maintenant, le fonctionnement du système d'amortissement des chocs horizontaux de la suspension 30 qui vient d'être décrite, va être expliqué brièvement, en se reportant principalement à la figure 4. Sur cette figure, on voit bien le décalage longitudinal entre une extrémité externe 33b′ et une extrémité interne 33b˝ de l'axe 33b, qui correspond à l'angle α décrit plus haut se reportant à la figure 1.

Lorsque la roue montée sur la fusée de support 32 est soumise à une contrainte D1 orientée longitudinalement vers l'arrière du véhicule, l'élément pendulaire 33 passe de sa position de repos représentée en trait fort, à la position de butée arrière 33D1 qui est représentée en pointillés sur la figure 4. Etant donné que l'inclinaison (l'angle α , sur la figure 1) de l'axe 33b, lorsque l'élément pendulaire est dans sa position 33D1, l'axe de rotation 32b va être déplacé de façon à donner une diminution du pincement à la roue correspondante.

Autrement dit, si la roue est sollicitée de manière à pivoter dans le sens de la flèche F1 autour de l'axe 33b (figure 4), on obtient une augmentation du pincement.

Par contre, si la roue est sollicitée de manière à pivoter dans le sens de la flèche F2, on obtiendra une diminution du pincement car l'orientation de l'axe est de préférence choisie pour obtenir un certain pincement initial, dans la position de repos illustrée en trait fort. De plus, le fait que l'axe 33b soit en arrière de l'axe 32b est particulièrement avantageux en cas d'efforts latéraux sur la roue (par exemple la roue extérieur en virage) puisque ces efforts créent un couple tendant à faire pivoter la roue autour d'un axe vertical, situé au niveau de l'axe 33b, donc à augmenter le pincement.

On a donc obtenu conformément à l'invention une suspension avec système d'amortissement des chocs longitudinaux efficace et procurant une sensation de conduite sécurisante.

Bien entendu l'invention n'est nullement limitée au mode de réalisation illustré, mais comprend les équivalents des moyens techniques décrits, si ceux-ci sont compris dans son champ.

Ainsi, l'invention peut s'appliquer à divers types de suspension, ainsi qu'à des trains supportant des roues motrices ou non.

## Revendications

1. Suspension notamment pour roue arrière de véhicule automobile, du type comprenant un organe de suspension (31) articulé sur la caisse (10) du véhicule (1), de façon à permettre le débattement de cet organe (31) dans un plan perpendiculaire au plan d'assiette (P) du véhicule, un élément pendulaire (33) articulé sur l'organe de suspension par l'intermédiaire d'un axe qui s'étend sensiblement parallèlement au plan d'assiette et transversalement au plan médian (M) du véhicule, ainsi qu'un support de roue (32) solidaire de l'élément pendulaire, caractérisée en ce que l'axe d'articulation (33b) de l'élément pendulaire sur l'organe de suspension (31) est incliné, à partir du support de roue (32), vers l'arrière du véhicule ainsi que vers ledit plan médian (M) et les moyens formant butée (45) comprennent une pièce élastiquement déformable (45a) qui est interposée entre l'organe de suspension (31) et l'élément pendulaire (33).

2. Suspension selon la revendication 1, caractérisée en ce qu'en projection sur le plan d'assiette (P) du véhicule, l'axe d'articulation précité (33b) forme avec une droite (31b) perpendiculaire au plan médian (M), un angle (α) compris entre 1 et 25°.

3. Suspension selon la revendication 1 ou 2, caractérisée en ce que l'axe d'articulation précité (33) est situé en-dessous de l'axe de rotation (32b) de la roue (2b) sur son support.

4. Suspension selon l'une des revendications 1 à 3, caractérisée en ce qu'elle comporte des moyens formant butée (45) qui sont disposés de façon à limiter le mouvement pendulaire de l'élément précité (33) autour de son axe d'articulation (33b).

5. Suspension selon l'une des revendications 1 à 4, caractérisée en ce que la pièce élastiquement déformable (45a) est disposée en regard de l'axe de rotation (32b) de la roue (2).

6. Suspension selon l'une des revendications 1 à 5, caractérisée en ce que la pièce élastiquement déformable (45a) a un profil annulaire et est liée par adhérence à une partie fixe (31c) qui est solidaire de l'organe de suspension (31), ainsi qu'à une partie mobile (32) qui est solidaire de l'élément pendulaire (33).

7. Suspension selon l'une des revendications 1 à 6, caractérisée en ce que la pièce élastiquement déformable (45a) est constituée par un bloc cylindrique qui est monté dans un logement cylindrique (31d) de l'organe de suspension (31), une partie cylindrique du support de roue (32) étant logée dans ledit bloc de sorte que les axes longitudinaux de la pièce, du logement et de la partie cylindrique sont confondus avec l'axe de rotation (32b) de la roue (2b).

8. Suspension selon l'une des revendications 1 à 7, caractérisée en ce que l'organe de suspension (31) est un bras oscillant dit "tiré" dont l'articulation sur la caisse (10) est constituée par un axe (31b) situé vers l'avant (1a) du véhicule par rapport aux axes précités (32b, 33b).

9. Suspension selon la revendication 8, caractérisée en ce que l'axe précité (31b) du bras oscillant est disposé de façon à être sensiblement parallèle au plan d'assiette (P) et perpendiculaire au plan médian (M) du véhicule (1).

10. Suspension selon l'une des revendications 1 à 9, caractérisée en ce que l'axe (33b) est en arrière de l'axe (32b).
